# EUROPEAN PATENT APPLICATION

(11) **EP 2 760 140 A1**
(43) Date of publication of application: **30.07.2014**
(21) Application number: 13152531.3
(22) Date of filing: 24.01.2013
(51) Int. Cl.: H04B 1/38, A45C 11/24, H04M 1/04, H04M 1/18

(54) **Bouncing case for portable electronic devices and bouncing portable electronic device**

(71) Applicant: Lin, Chia-Yen, Dongguan City, Guangdong (CN)
(72) Inventor: Lin, Chia-Yen, Dongguan City, Guangdong (CN)
(74) Representative: Becker Kurig Straus

(57) **Abstract**

A bouncing case (1) to convert impact kinetic energy into elastic potential energy is provided. The bouncing case (1) has a housing (10) and multiple bouncing elements (20). Wherein, the housing (10) has a cavity (14) to set up a portable electronic device (A). The bouncing element (20) has an outer surface (21) formed protruding relative to the outer face (A1) of the portable electronic device (A), and has a resilience ratio more than 40%. A bouncing portable electronic device is also provided. And when the bouncing portable electronic device is dropped onto ground, the bouncing elements (20) convert the impact kinetic energy into elastic potential energy during bounces. By repeating the conversion during multiple bounces, the impact kinetic energy is gradually reduced and the portable electronic device (A) is protected.

## Description

### 1. Field of the Invention

The present invention relates to a bouncing case for a portable electronic device, which can convert impact kinetic energy into elastic potential energy when a portable electronic device is dropped onto the ground and bounces. More particularly, the present invention relates to a bouncing case and a bouncing portable electronic device, wherein the bouncing case absorbs impacts by converting the portable electronic device's impact kinetic energy into bouncing elements' elastic potential energy, so that the impact energy gradually reduces via multiple conversions during bounces.

### 2. Description of the Related Art(s)

With the advance of technology, portable electronic devices are becoming thinner and lighter, thus internal components and electronic circuits are more compactly assembled. However, such sophisticated and highly compact portable electronic devices can hardly withstand a strong physical impact.

In order to prevent the aforementioned problem, people often use protective cases to protect their portable electronic devices. However, protective cases at present are made either with rigid metal or with plastics, which only absorbs impact and deforms/breaks during impact, rather than converting the impact kinetic energy into storage of elastic potential energy. And once the impact energy exceeds the amount of energy that a protective case can absorb, the excessive impact energy is transferred to the portable electronic device, resulting in damage.

In view of the drawback that the conventional protective case fails to protect a portable electronic device from being damaged by strong physical impact, an objective of the present invention is to provide a bouncing case to convert the impact kinetic energy of a portable electronic device into a storage of elastic potential energy of the bouncing elements.

To achieve the foregoing objective, the present invention provides a bouncing case for a portable electronic device, comprising:
a housing, having:
   a front wall;
   a bottom wall formed opposite to the front wall;
   multiple sidewalls formed between the front wall and the bottom wall and connected with each other to form multiple corners between the sidewalls; and
   a cavity formed in the front wall and defined by the front wall, the bottom wall and the sidewalls; and
   multiple bouncing elements respectively disposed at the corners of the housing and the bouncing elements having a resilience ratio more than 40%.

In accordance with the present invention, the bouncing elements of the bouncing case have an outer surface protruding relative to the front wall, the bottom wall and the sidewalls. When a portable electronic device enclosed within the bouncing case is dropped to an impact surface, the bouncing elements of the bouncing case will be the first contact points to confront the impact surface. That is, the portable electronic device is suspended by the bouncing elements above the impact surface. Therefore, the housing of the bouncing case as well as the portable electronic device enclosed therein do not directly hit the impact surface. Besides, the bouncing elements disposed at the corners of the housing further convert the impact kinetic energy into the bouncing elements' elastic potential energy.

In the specification, the description "the bouncing elements respectively disposed at the corners of the housing" does not strictly limit the bouncing elements to be disposed precisely at the center of the corner. For example, the bouncing element may be disposed adjacent to or slightly depart from the center of the corner, which should also be interpreted as falling within the scope that the bouncing element is disposed at the corner of the housing.

As measured by Bayshore Resilience ASTM D2632 method, the resilience ratio of the bouncing element is more than 40%. If the portable electronic device enclosed within the bouncing case is dropped to the ground accidentally, the bouncing elements of the bouncing case can convert most of the impact kinetic energy into the bouncing elements' elastic potential energy, and dissipate a fraction of the impact energy during each bounce, thus protecting the portable electronic device from strong impact force.

A desirable bouncing element with a resilience ratio of 60% correspondingly has a conversion efficiency of 60% from impact kinetic energy into elastic potential energy. For example, after a first bounce, 60% of the impact kinetic energy is converted into the bouncing elements' elastic potential energy, and 40% is dissipated as other forms of energy. And the second bounce converts the remaining 60% of the initial impact kinetic energy into another 60% elastic potential energy. Therefore, after the first bounce, the impact kinetic energy remains 60% of its initial impact kinetic energy, and after the second bounce, the impact kinetic energy is further reduced and only remains 36% of its initial kinetic energy, and by repeating the bouncing process, the impact kinetic energy is reduced to minimum and the portable electronic device is protected.

Preferably, the bouncing elements protrude optionally relative to the sidewalls, the front wall or the bottom wall of the housing. More preferably, the bouncing elements protrude relative to all the side walls, the front walls and the bottom wall of the housing. When a portable electronic device is mounted in the cavity of said bouncing case, the portable electronic device is suspended by the bouncing elements, thereby preventing the portable electronic device from being hit directly.

Preferably, the housing has a contour matching a shape of the portable electronic device to provide enhanced protection.

Preferably, the front wall and the bottom wall are formed in a rectangular shape, the bouncing case has four sidewalls formed between the rectangular front wall and the rectangular bottom wall, and the four sidewalls are connected with each other to form four corners between the four sidewalls. The bouncing case comprises four bouncing elements respectively disposed at the corners of the housing.

Preferably, the housing of the bouncing case has a hardness higher than that of the bouncing elements such that the housing is not deformed by physical impact and can be a firm support to securely enclose the portable electronic device without detaching from the portable electronic device.

Preferably, the bouncing elements are made of a material selected from the group consisting of: polyurethane, vulcanized polybutadiene and natural rubber.

Preferably, the housing further has a bouncing element disposed on one of the sidewalls of the housing. Said bouncing element can enhance the protection to the side faces of the portable electronic device. More particularly, when the portable electronic device is larger in size, said bouncing element can even more effectively prevent the portable electronic device from being hit on the side faces thereof.

Preferably, the aforementioned bouncing elements are formed in a spherical shape. Herein, the spherical bouncing elements include those disposed at the corners and that disposed on the sidewall.

Preferably, the housing of the bouncing case further comprises a cutout formed in the sidewall of the housing corresponding to a button of the electronic device for the convenience of operating the electronic device.

Preferably, the bottom wall of the housing has a back surface opposite to the cavity, and the bouncing case further has a buffer element protruding from the back surface. The buffer element prevents the portable electronic device from being hit on the back face thereof. Preferably, the buffer element is formed as a cone-shaped spinning top structure.

To achieve the foregoing objective, the present invention also provides a bouncing portable electronic device, comprising a bouncing case as described above and a portable electronic device mounted in the cavity of the bouncing case.

The bouncing case can be applied to enclose various portable electronic devices such as cell phones or tablet computers to form the bouncing portable electronic device.

Preferably, the buffer element is formed as a cone-shaped spinning top structure and is located on a common gravity axis defined by the portable electronic device and the bouncing case. With said configuration, the bouncing case with the buffer element can also function as a spinning top with extra advantages in amusement and entertainment.

To sum up the technical features of the present invention, the bouncing case/bouncing portable electronic device can convert the impact kinetic energy of a portable electronic device into the elastic potential energy of the bouncing elements, thereby protecting the portable electronic device enclosed therein from being damaged by strong physical impact. Since the conversion reduces the impact kinetic energy gradually by each bounce to a minimum, the portable electronic device is perfectly protected.

Other objectives, advantages and novel features of the invention will become more apparent from the following detailed description when taken in conjunction with the accompanying drawings.

### IN THE DRAWINGS:

Fig. 1 is a perspective view of a portable electronic device enclosed within a bouncing case in accordance with the present invention;
Fig. 2 is an exploded perspective view of a first embodiment of the bouncing case in accordance with the present invention with a portable electronic device;
Fig. 3 is a front view in partial section of the first embodiment of the bouncing case and the portable electronic device in Fig. 2;
Fig. 4 is a side view of the first embodiment of the bouncing case in Fig. 2, shown placed on the ground;
Fig. 5 is an operational front view of the first embodiment of the bouncing case in Fig. 2 being dropped to and bounced from the ground;
Fig. 6 is a perspective view of a second embodiment of the bouncing case in accordance with the present invention with a portable electronic device;
Fig. 7 is a perspective view of a third embodiment of the bouncing case in accordance with the present invention with a portable electronic device;
Fig. 8 is a side view of a third embodiment of the bouncing case in Fig. 7, shown placed on the ground; and
Fig. 9 is another side view of the third embodiment of the bouncing case in Fig. 7, shown placed on the ground.

Hereinafter, one skilled in the arts can easily realize the advantages and effects of a bouncing case for a portable electronic device in accordance with the present invention from the following embodiments. The descriptions proposed herein are just preferable embodiments for the purpose of illustrations only, not intended to limit the scope of the invention. Various modifications and variations could be made in order to practice or apply the present invention without departing from the spirit and scope of the invention.

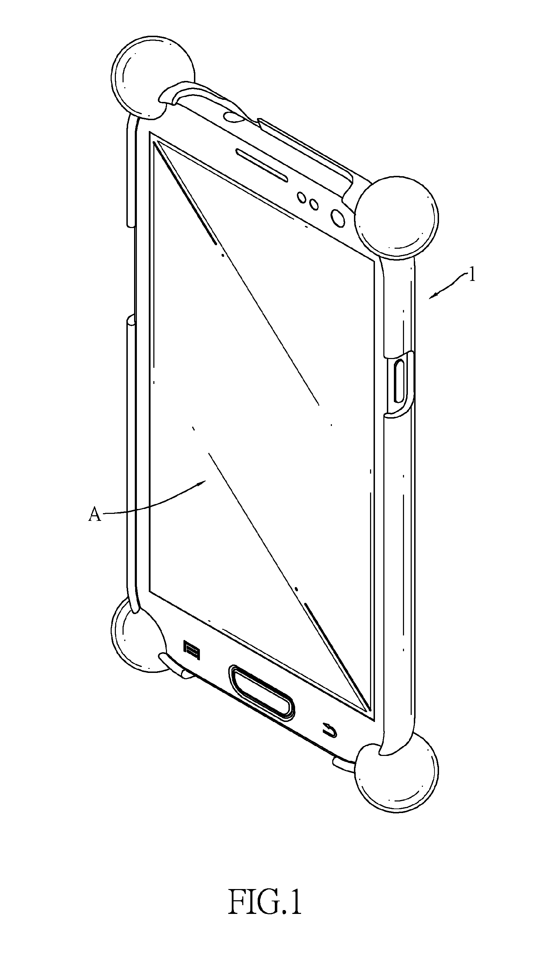

The first embodiment of the present invention is to provide a bouncing case for a portable electronic device to convert impact kinetic energy into elastic potential energy during bouncing. With reference to Fig. 1, the portable electronic device A is a cell phone, and the contour of the bouncing case 1 can be designed to fit with the electronic device A.

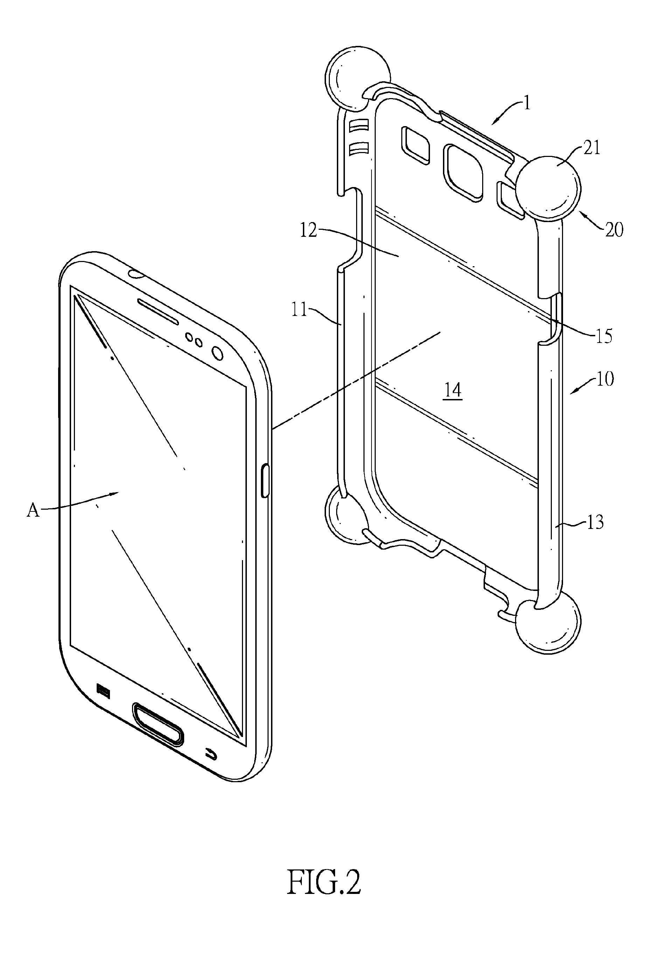

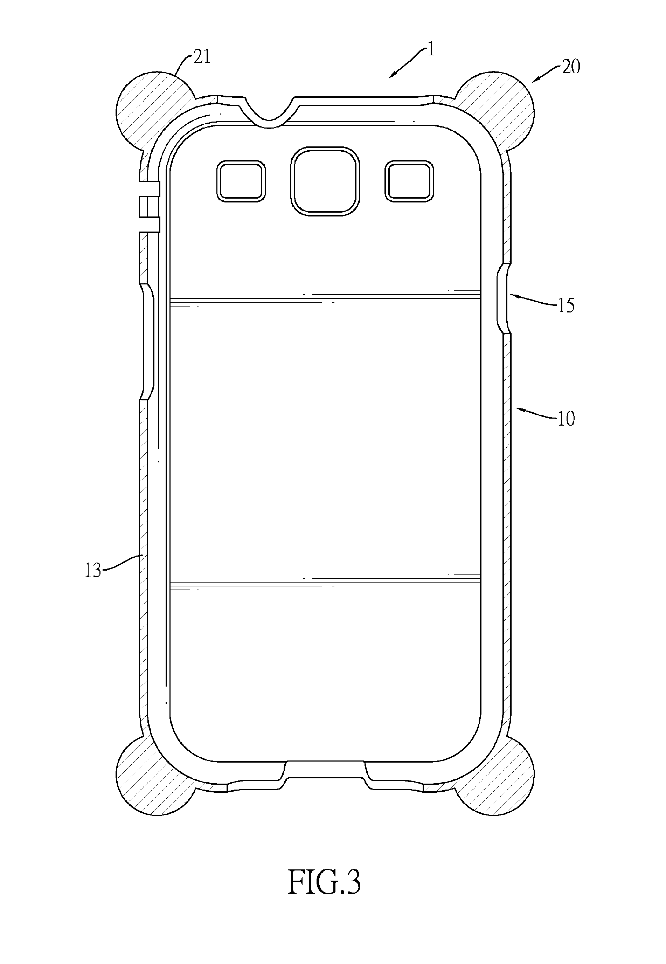

With reference to Figs. 2 to 4, the bouncing case 1 to convert impact kinetic energy into elastic potential energy has a housing 10 and multiple bouncing elements 20.

The housing 10 is hollow and substantially rectangular. The housing 10 has a rectangular front wall 11, a rectangular bottom wall 12 and four sidewalls 13. The rectangular bottom wall 12 is formed opposite to the rectangular front wall 11. Four sidewalls 13 are connected with each other to form four corners between the sidewalls 13, and each corner is defined by two adjacent connected sidewalls 13. The connected four sidewalls 13 are formed between the rectangular front wall 11 and the rectangular bottom wall 12. The front wall 11 is depressed to form a cavity 14, which is defined by the rectangular front wall 11, the rectangular bottom wall 12 and four sidewalls 13, for holding a portable electronic device A inside.

In accordance with the present invention, the housing 10 has a hardness higher than that of the bouncing elements 20 such that the bouncing case 1 will not be deformed and detached from the portable electronic device A when subjected to a physical impact, and the portable electronic device A can be fully protected by the bouncing case 1. In addition, the housing 10 further has multiple cutouts 15 formed in the sidewall 13 of the housing 10 and corresponding to the buttons of the electronic device A for the convenience of operating the electronic device A. Herein, the cutouts 15 are not strictly limited to be formed in the sidewall 13, but also can be formed in the bottom wall 12 of the housing 10.

Four bouncing elements 20 are individually disposed at four corners of the housing 10. Each bouncing element 20 has an outer surface 21 protruding relative to the rectangular front wall 11, the rectangular bottom wall 12 and two of the connected sidewalls 13 adjacent to the corner, such that the housing 10 will not directly contact or be hit by the impact surface (e.g., the ground to which the electronic device is dropped).

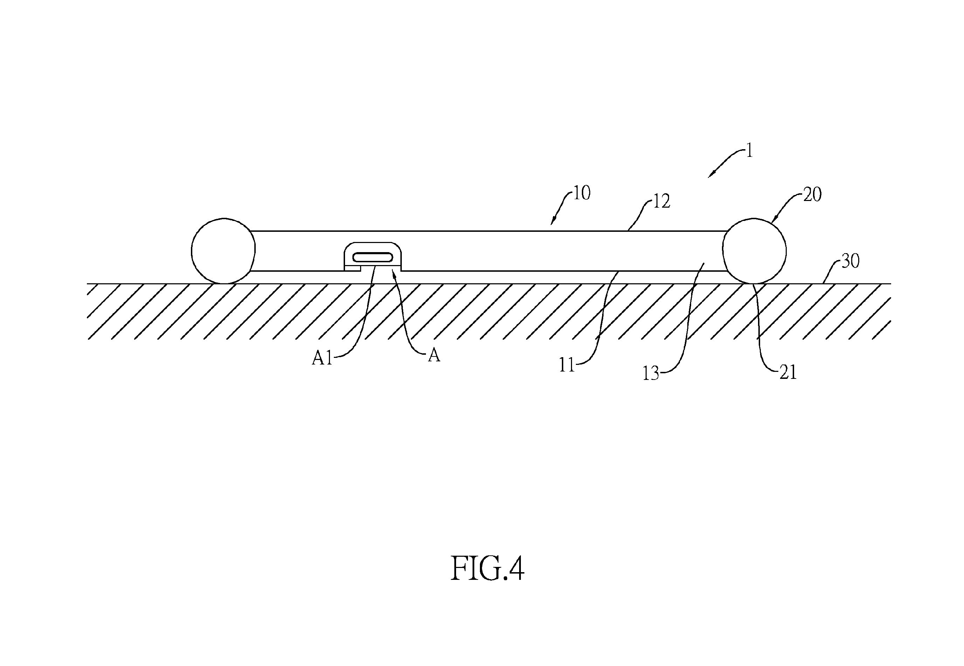

With further reference to Fig. 4, the outer surfaces 21 of the bouncing elements 20 protrude relative to the front wall 11, bottom wall 12 and sidewalls 13 of the bouncing case 1 and a top face A1 of the portable electronic device A (i.e., the operating interface of the portable electronic device). The portable electronic device A is suspended above the ground 30 such that the bouncing elements 20 are in direct contact with the ground 30 upon dropping, and both the housing 10 and the top face A1 of the portable electronic device A will neither contact nor be hit by the ground 30 directly.

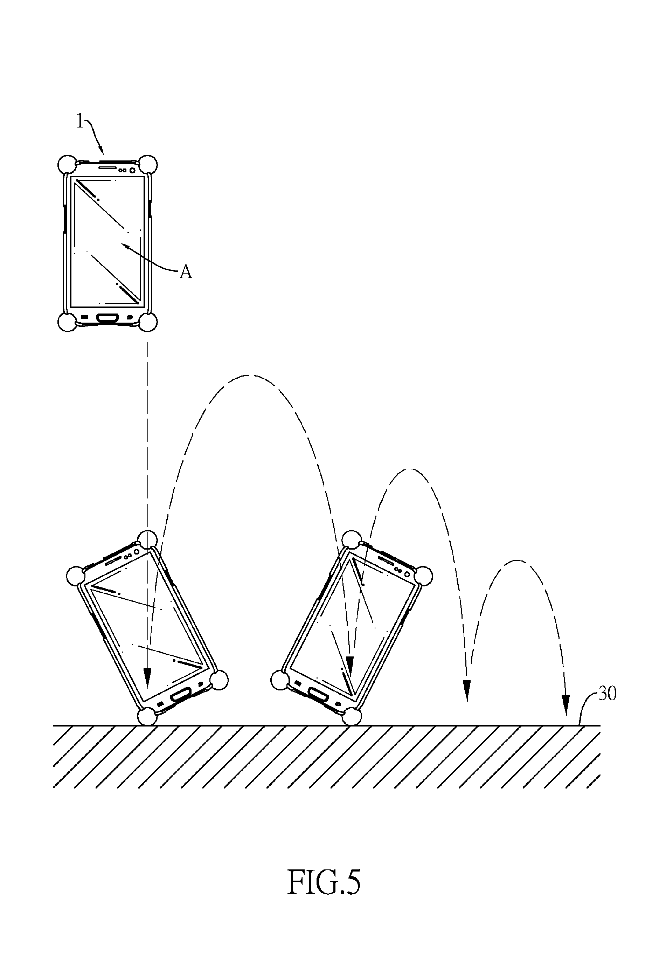

In accordance with the present invention, the bouncing elements 20 of the bouncing case 1 have a resilience ratio more than 40%. A portable electronic device A becomes a bouncing portable electronic device if enclosed with a bouncing case 1. With reference to Fig. 5, when the bouncing portable electronic device is dropped to the ground 30, the bouncing case 1 will convert the impact kinetic energy into elastic potential energy and bounce, then further convert the next impact kinetic energy into elastic potential energy by repeating the process, thereby gradually reducing the impact kinetic energy to minimum. Therefore, the impact force towards the portable electronic device A can be reduced to a minimum during the course of multiple bounces to prevent the portable electronic device A from being damaged.

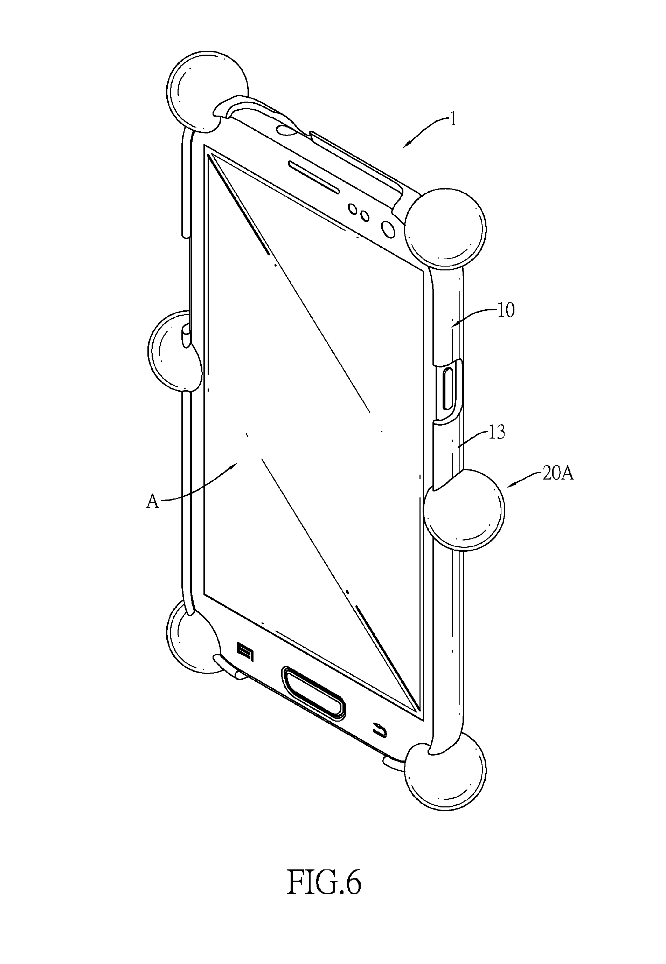

With reference to Fig. 6, the second embodiment of the bouncing case 1 of the present invention further has two bouncing elements 20A disposed respectively on the two opposite sidewalls 13 of the housing 10 to enhance the protection to the portable electronic device A from a side face thereof.

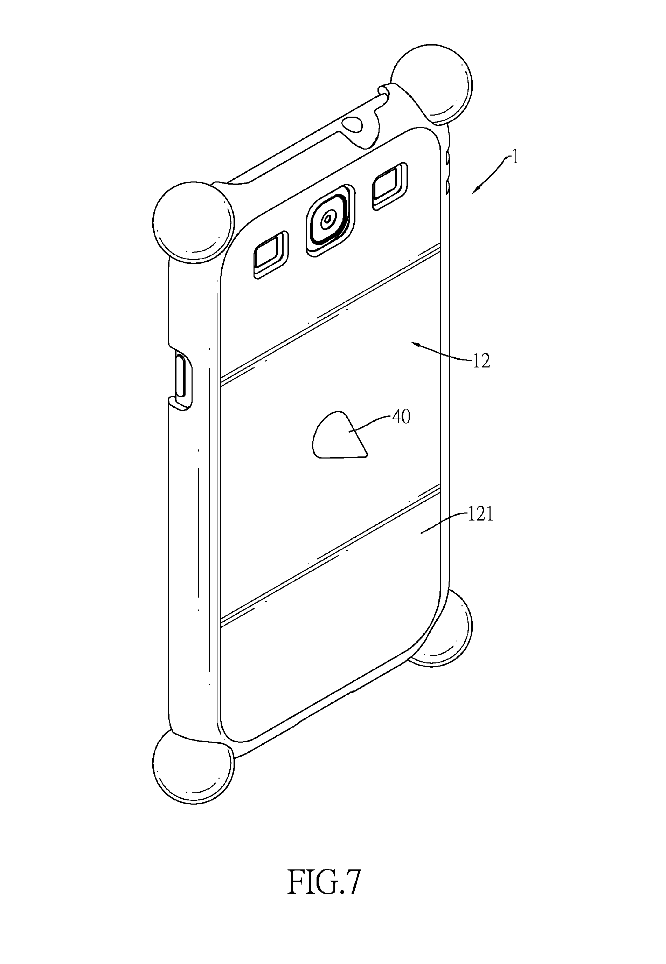

The third embodiment of the bouncing case 1 in accordance with the present invention is shown in Figs. 7 to 9. With reference to Fig .7, the bottom wall 12 of the bouncing case 1 further has a back surface 121 opposite to the cavity, and the bouncing case 1 further has a buffer element 40 formed on and protruding from the back surface 121.

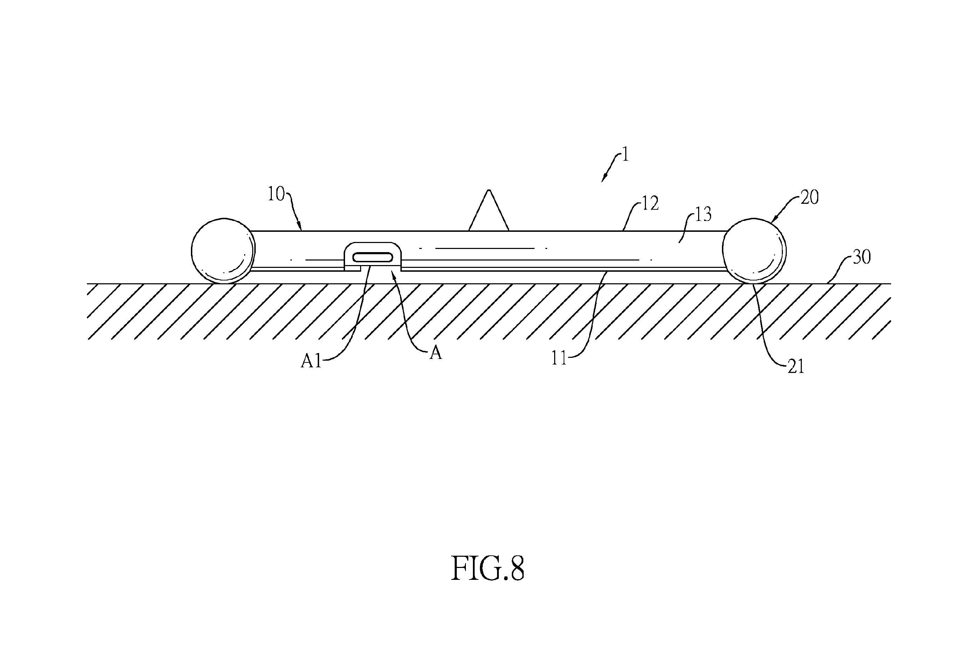

With reference to Fig. 8, the outer surfaces 21 of the bouncing elements 20 protrude relative to the front wall 11, the bottom wall 12 and sidewalls 13 of the housing 10 and a top face A1 of the electronic device A. When a portable electronic device A is dropped to the ground 30 accidentally, the bouncing case 1 can prevent the top face A1 thereof from being directly hit on the ground 30. Thus, direct damage to the touch screen or operating interface can be largely reduced.

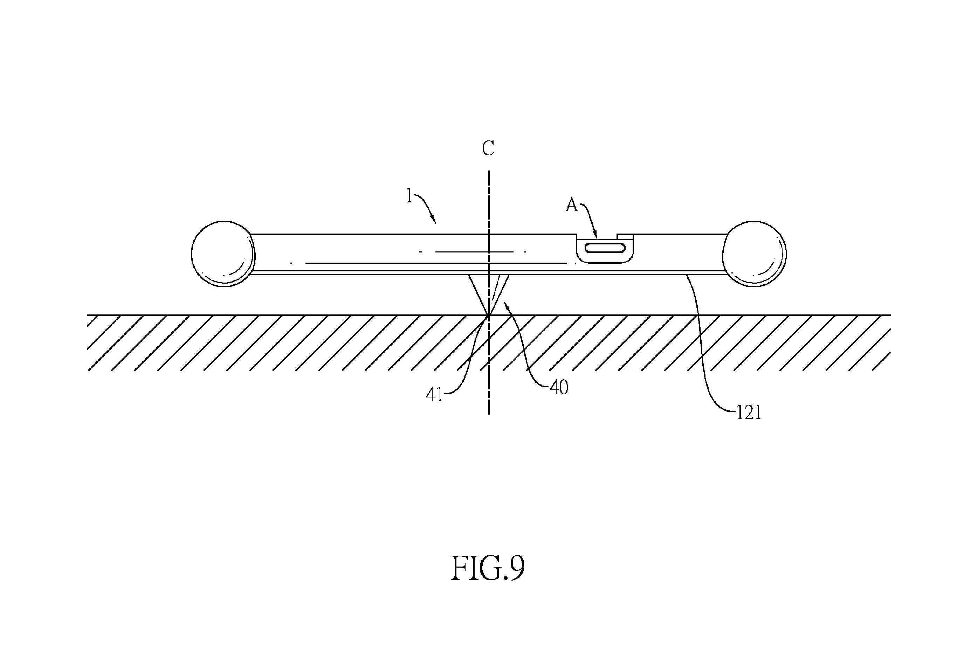

With further reference to Fig. 9, the buffer element 40 is formed as a cone-shaped spinning top structure and has a spinning axis 41 extending through a common gravity axis C defined by the bouncing case 1 and the portable electronic device A. In addition to preventing the bouncing case 1 and the electronic device A from being hit on the back surface 121 thereof, the buffer element 40 can further serve as a spinning top for amusement and entertainment purposes.

In summary, the bouncing case 1 of the present invention is used to enclose the electronic device A to protect the portable electronic device A by converting impact kinetic energy into the bouncing elements' elastic potential energy, and after multiple conversions during bounces, the physical impact is reduced to minimum. Thus, the bouncing case 1 of the present invention effectively reduces a strong impact by multiple bounces.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A bouncing case (1) for a portable electronic device (A) comprising a housing (10) having a front wall (11), a bottom wall (12) formed opposite to the front wall (11), multiple sidewalls (13) formed between the front wall (11) and the bottom wall (12) and connected with each other to form multiple corners between the sidewalls (13), and a cavity (14) formed in the front wall (11) and defined by the front wall (11), the bottom wall (12) and the sidewalls (13), and the bouncing case (1) **characterized in that**:
multiple bouncing elements (20) respectively disposed at the corners of the housing (10) and having a resilience ratio more than 40%.

2. The bouncing case (1) as claimed in claim 1, wherein the bouncing elements (20) protrude relative to the sidewalls (13) of the housing (10).

3. The bouncing case (1) as claimed in claim 1, wherein the bouncing elements (20) protrude relative to the front wall (11) and the bottom wall (12) of the housing (10).

4. The bouncing case (1) as claimed in claim 2, wherein the bouncing elements (20) protrude relative to the front wall (11) and the bottom wall (12) of the housing (10).

5. The bouncing case (1) as claimed in claim 1, wherein the front wall (11) and the bottom wall (12) are formed in a rectangular shape, the bouncing case (1) has four sidewalls (13) formed between the rectangular front wall (11) and the rectangular bottom wall (12), and the four sidewalls (13) are connected with each other to form four corners between the sidewalls (13); and the bouncing case (1) comprises four bouncing elements (20) respectively disposed at the corners of the housing (10).

6. The bouncing case (1) as claimed in any one of claims 1 to 5, wherein the housing (10) has a hardness higher than a hardness of the bouncing elements (20).

7. The bouncing case (1) as claimed in any one of claims 1 to 5, wherein the bouncing elements (20) are made of a material selected from the group consisting of: polyurethane, vulcanized polybutadiene and natural rubber.

8. The bouncing case (1) as claimed in any one of claims 1 to 5, wherein the housing (10) further has a bouncing element (20A) disposed on one of the sidewalls (13) of the housing (10).

9. The bouncing case (1) as claimed in any one of claims 1 to 5, wherein the bottom wall (12) of the housing (10) has a back surface (121) opposite to the cavity (14), and the bouncing case (1) further has a buffer element (40) protruding from the back surface (121).

10. The bouncing case (1) as claimed in any one of claims 1 to 5, wherein the housing (10) further comprises a cutout (15) formed in the sidewall of the housing (10), the bottom wall (12) of the housing (10), or their combination.

11. A bouncing portable electronic device comprising a bouncing case (1) having a housing (10) having a front wall (11), a bottom wall (12) formed opposite to the front wall (11), multiple sidewalls (13) formed between the front wall (11) and the bottom wall (12) and connected with each other to form multiple corners between the sidewalls (13), a cavity (14) formed in the front wall (11) and defined by the front wall (11), the bottom wall (12) and the sidewalls (13); and a portable electronic device (A) mounted in the cavity of the bouncing case (1); and the bouncing portable electronic device **characterized in that**:
multiple bouncing elements (20) respectively disposed at the corners of the housing (10) and having a resilience ratio more than 40%.

12. The bouncing portable electronic device as claimed in claim 11, wherein the bouncing elements (20) protrude relative to the front wall (11), the bottom wall (12) and the sidewalls (13) of the housing (10).

13. The bouncing portable electronic device as claimed in claim 11, wherein the housing (10) has a hardness higher than a hardness of the bouncing elements (20).

14. The bouncing portable electronic device as claimed in any one of claims 11 to 13, wherein the bottom wall (12) of the housing (10) has a back surface (121) opposite to the cavity (14), and the bouncing case (1) further has a buffer element (40) protruding from the back surface (121),

15. The bouncing portable electronic device as claimed in 14, wherein the buffer element (40) is formed as a spinning top structure and is located on a common gravity axis (C) defined by the portable electronic device (A) and the bouncing case (1).
